Europäisches Patentamt

(19) European Patent Office

Office européen des brevets

(11) Numéro de publication : **0 022 718**
**B1**

(12) **FASCICULE DE BREVET EUROPÉEN**

(45) Date de publication du fascicule du brevet :
**16.11.83**

(21) Numéro de dépôt : **80401041.1**

(22) Date de dépôt : **10.07.80**

(51) Int. Cl.³ : **H 04 L   1/02**

(54) **Dispositif de commutation de deux trains numériques.**

(30) Priorité : **17.07.79 FR 7918479**

(43) Date de publication de la demande :
**21.01.81 Bulletin 81/03**

(45) Mention de la délivrance du brevet :
**16.11.83 Bulletin 83/46**

(84) Etats contractants désignés :
**DE GB IT NL**

(56) Documents cités :
**FR A 2 293 836**
**US A 3 539 933**

(73) Titulaire : **SOCIETE ANONYME DE TELECOMMUNI-
CATIONS**
**40 avenue de New York**
**F-75116 Paris (FR)**

(72) Inventeur : **Payen, Georges André**
**10 rue Jules Guesde**   ·
**F-92120 Montrouge (FR)**

(74) Mandataire : **Bloch, Robert et al**
**Cabinet ROBERT BLOCH 39 avenue de Friedland**
**F-75008 Paris (FR)**

Jouve, 18, rue St-Denis, 75001 Paris, France

Dispositif de commutation de deux trains numériques

L'invention concerne un dispositif de commutation pour transmettre un seul des deux trains numériques qu'il reçoit en fonction d'un signal de demande de commutation, les trains numériques contenant des signaux de données identiques et des signaux d'horloge de même fréquence, le dispositif comprenant un circuit d'aiguillage pour les signaux de données et un circuit d'aiguillage pour les signaux d'horloge.

Un tel dispositif trouve son emploi dans tout système de transmissions numériques véhiculant des informations numériques par deux chemins différents, le choix du chemin étant fonction de critères déterminés propres au système ou pouvant être commandé de l'extérieur. C'est le cas, en particulier, des systèmes de transmissions numériques par liaison hertzienne, dans lesquels les deux chemins en question sont constitués par deux voies hertziennes qui transmettent la même information, l'une des voies étant une voie de transmission normale et l'autre une voie de secours que l'on utilise en particulier lorsque la qualité de la transmission sur la voie normale devient mauvaise.

Il est important que la commutation ne soit pas perçue par l'utilisateur, donc qu'elle entraîne le minimum d'erreurs, et surtout qu'elle n'introduise pas de transition supplémentaire dans le signal d'horloge. L'introduction d'une transition supplémentaire dans le signal d'horloge est à éviter absolument, car elle provoque une désynchronisation de la transmission et par suite, l'interruption totale de la transmission.

Un moyen pour remédier aux conséquences de la commutation consiste à prévoir un oscillateur inclus dans une boucle de phase qui suit la phase du signal d'horloge choisi, le signal d'horloge fourni par l'oscillateur local assurant le recalage en phase des données binaires transmises. La boucle de phase exerce un effet de « volant » qui permet d'éliminer la discontinuité du signal d'horloge survenant lors de la commutation.

Cependant, un tel dispositif exige l'emploi de circuits intégrés analogiques. En outre, sa mise au point est relativement délicate.

L'invention vise un dispositif de commutation du type indiqué dans lequel l'introduction de transmission supplémentaire lors de la commutation est empêchée par un moyen très simple.

A cet effet, le dispositif de commutation selon l'invention comprend un circuit de commande des circuits d'aiguillage qui délivre un signal dont les changements d'état ne se produisent, après un changement d'état du signal de demande de commutation, qu'à partir du moment où les deux signaux d'horloge sont dans le même état logique.

L'invention repose sur l'observation qu'une transition supplémentaire ne risque d'être introduite dans le signal d'horloge transmis que si les deux signaux d'horloge incidents se trouvent dans des états logiques différents lors de la commutation. Donc, en validant la demande de commutation seulement au moment où les signaux d'horloge se trouvent dans le même état, on élimine le risque de l'introduction de transitions supplémentaires dans le signal d'horloge transmis.

Dans une forme de réalisation avantageuse, un filtre passe-bande dont la fréquence centrale est égale à la fréquence nominale des signaux d'horloge est monté à la sortie du circuit d'aiguillage des signaux d'horloge.

Ce filtre réalise l'intégration de l'état transitoire introduit par la commutation dans le signal d'horloge et dû au déphasage entre les signaux d'horloge incidents.

L'invention sera bien comprise à la lecture de la description suivante, faite en référence aux dessins annexés.

Dans ces dessins :

La figure 1 est un schéma-bloc du dispositif de commutation selon l'invention.

La figure 2 est un diagramme des temps illustrant le fonctionnement du dispositif.

La figure 3 représente un exemple de réalisation.

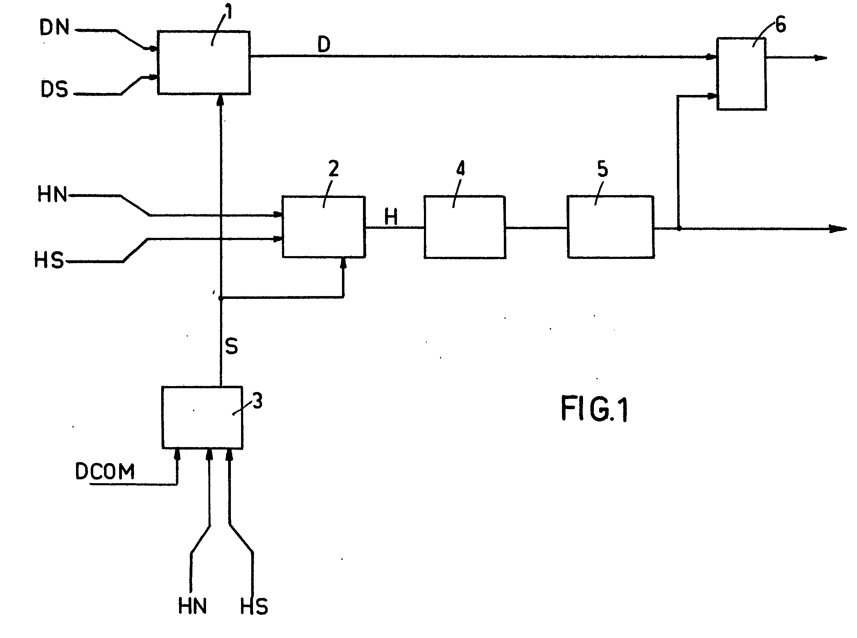

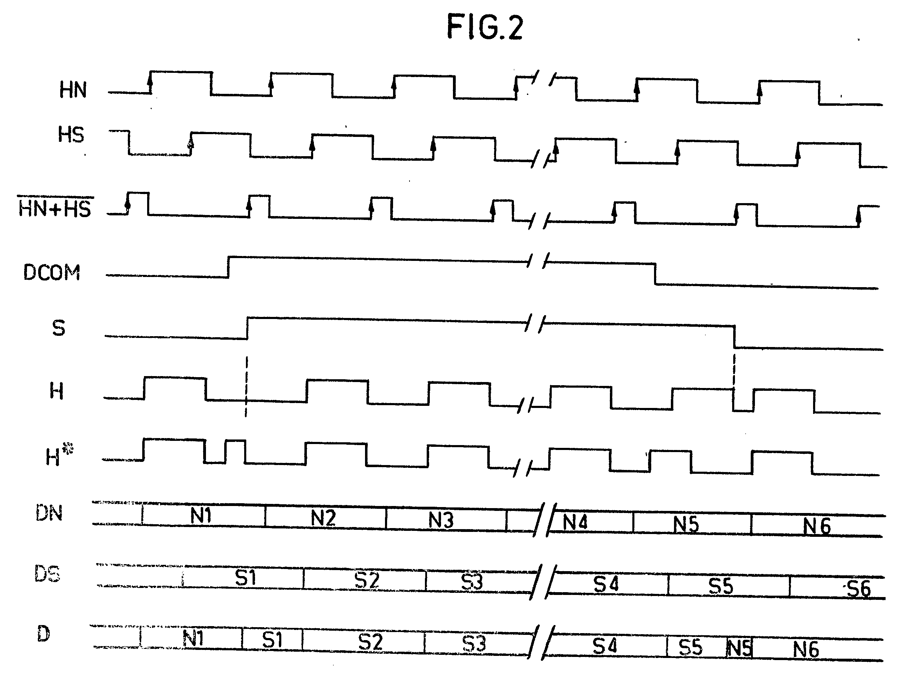

Le dispositif représenté à la figure 1 comprend un circuit d'aiguillage données 1 et un circuit d'aiguillage horloge 2. Le circuit d'aiguillage données 1 comporte deux entrées sur lesquelles il reçoit respectivement le signal de données DN et le signal de données DS illustrés à la figure 2, les signaux DN et DS étant identiques. Il transmet l'un ou l'autre de ces signaux suivant l'état d'un signal de commande S qui lui est appliqué, le signal de sortie du circuit 1 étant repéré D.

De façon similaire, le circuit d'aiguillage horloge 2 transmet un signal H qui correspond soit à un signal d'horloge HN, soit à un signal d'horloge HS. Les signaux HN et HS ont la même fréquence, mais sont déphasés l'un par rapport à l'autre d'une valeur φ quelconque. Le même signal de commande S est appliqué au circuit 2 pour déterminer le signal transmis.

Les signaux de données DN et d'horloge HN constituent une première voie numérique et les signaux DS et HS une seconde voie numérique. Dans l'application à la transmission par liaison hertzienne, les signaux DN et HN constituent une voie normale et les signaux DS et HS une voie de secours que l'on utilise lorsque la qualité de la transmission se détériore sur la voie normale.

Le signal de commande S est émis par un circuit de commande 3 en réponse à une demande de commutation DCOM. Selon une caractéristique essentielle de l'invention, le circuit de commande 3 reçoit également les signaux d'horloge HN et HS et il n'émet un signal de commande, après réception de la demande de commutation, que lorsque les signaux d'horloge HN et HS se trouvent dans le même état logique, de préférence lorsqu'ils sont tous deux à l'état « 0 ).

Le fonctionnement du dispositif est illustré par le diagramme des temps de la figure 2. Initialement, les circuits d'aiguillage 1 et 2 transmettent les signaux DN et HN. Puis une demande de commutation se produit, le signal DCOM passe de l'état « 0 » à l'état « 1 ». Mais la demande de commutation DCOM n'est prise en compte par le circuit de commande 3 qu'à partir du moment où les deux signaux HN et HS sont à l'état « 0 », le signal $\overline{HN + HS}$ présentant alors un front montant. C'est ce front montant qui détermine l'instant de la commutation. On voit qu'ensuite, le signal D correspond au signal DS et le signal H au signal d'horloge HS.

A la fin de la demande de commutation, ce qui correspond au retour à une qualité de transmission satisfaisante sur la voie normale, le signal DCOM retourne à l'état « 0 », et le processus inverse se déroule : la commutation effective se produit lors du premier front montant du signal $\overline{HN + HS}$ qui suit la fin de la demande de commutation. Ce sont à nouveau les signaux DN et HN qui sont transmis par les circuits d'aiguillage 1 et 2.

Le fait de ne valider la demande de commutation que lors du front montant de $\overline{HN + HS}$ supprime tout risque d'introduire des transitions indésirables dans le signal H. Si l'on n'appliquait pas cette procédure de validation et que la commutation était effectuée dès le changement d'état du signal DCOM, on obtiendrait le signal H$^+$ de la figure 2, et l'on constate en le comparant au signal H obtenu selon l'invention, qu'il comporte une transition supplémentaire introduite lors du passage du signal DCOM à l'état « 1 ».

Le dispositif de la figure 1 comprend en outre, monté à la sortie du circuit d'aiguillage horloge 2, un filtre passe-bande 4 à bande étroite, dont la fréquence centrale est la fréquence nominale des signaux d'horloge HN et HS. Ce filtre agit pour intégrer la variation de largeur de l'impulsion d'horloge du signal H transmise lors d'une commutation.

Un circuit de mise en forme 5 est relié à la sortie du filtre 4.

Enfin, un circuit de recalage 6 assure le recalage en phase du signal de données D au moyen du signal d'horloge filtré et mis en forme délivré par le circuit 5.

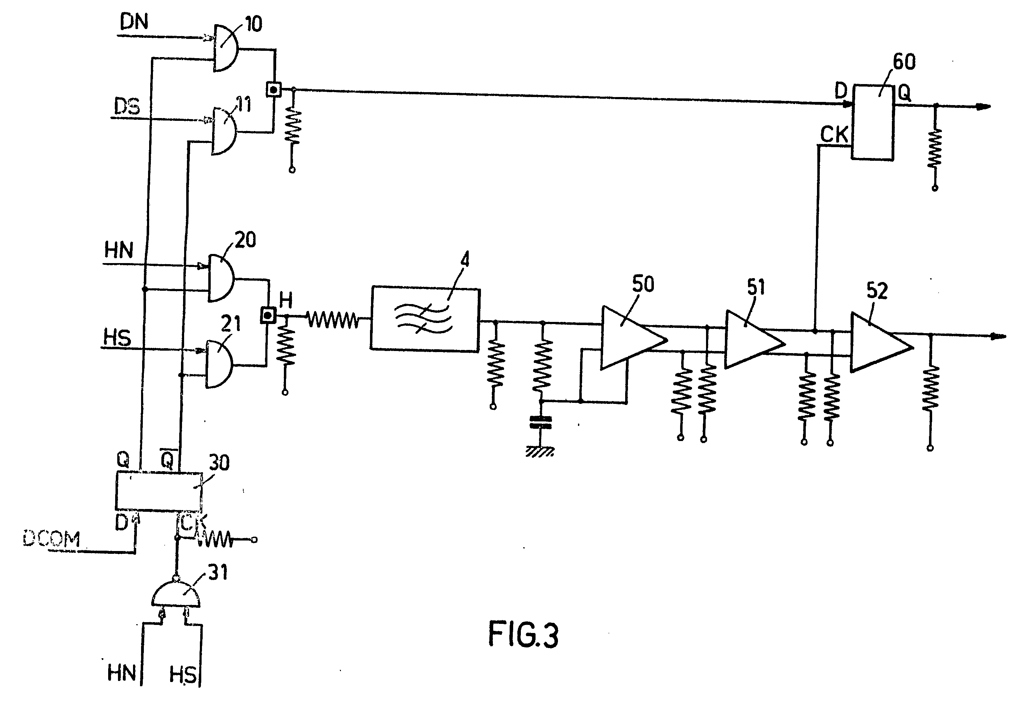

Un exemple de réalisation du dispositif de la figure 1 est représenté à la figure 3.

Le circuit d'aiguillage données comprend deux portes ET 10, 11 dont les sorties sont réunies de manière à réaliser une fonction « OU câblé ».

La porte 10 reçoit le signal DN et le signal issu de la sortie Q d'une bascule 30 appartenant au circuit de commande, et la porte 11 reçoit le signal DS et le signal complémentaire issu de la sortie $\overline{Q}$ d'une bascule 30 appartenant au circuit de commande.

Le circuit d'aiguillage horloge comprend de façon similaire deux portes ET 20, 21 recevant respectivement les signaux HN et HS et reliées comme les portes 10, 11 à la bascule 30.

Le circuit de commande comprend la bascule 30, qui reçoit le signal de demande de commutation DCOM sur son entrée D, et une porte OU-NON 31 qui reçoit les signaux d'horloge HN et HS et délivre le signal $\overline{HN + HS}$ sur l'entrée d'horloge de la bascule 30. Il est clair dans ces conditions que la bascule 30 délivre sur sa sortie Q le signal S représenté à la figure 2.

Le circuit de mise en forme comprend de façon connue une série de comparateurs 50, 51, 52, et le circuit de recalage est constitué par une bascule 60 recevant le signal de données D sur son entrée D et le signal issu du circuit de mise en forme sur son entrée d'horloge.

En ce qui concerne l'émission de la demande de commutation, on pourra se reporter, pour le cas des liaisons hertziennes, à la demande de brevet français N° 77 36604.

## Revendications

1. Dispositif de commutation pour transmettre un seul (D, H) des deux trains numériques (DN, HN ; DS, HS) qu'il reçoit en fonction d'un signal (DCOM) de demande de commutation, les trains numériques (DN, HN ; DS, HS) contenant des signaux de données identiques (DN, DS) et des signaux d'horloge de même fréquence (HN, HS) le dispositif comprenant un circuit d'aiguillage (1 ; 10, 11) pour les signaux de données et un circuit d'aiguillage (2 ; 20, 21) pour les signaux d'horloge, caractérisé par le fait qu'il comprend un circuit (3 : 30, 31) de commande des circuits d'aiguillage (1, 2) qui délivre un signal (S) dont les changements d'état ne se produisent, après un changement d'état du signal de demande de commutation (DCOM), qu'à partir du moment où les deux signaux d'horloge (HN, HS) sont dans le même état logique.

2. Dispositif selon la revendication 1, caractérisé par le fait que le circuit de commande (3) comprend une porte OU-NON (31) recevant les deux signaux d'horloge (HN, HS) et dont la sortie est reliée à l'entrée d'horloge d'une bascule (30) dont l'entrée D reçoit le signal de demande de commutation (DCOM), le signal de commande étant disponible à la sortie de la bascule (30).

3. Dispositif selon l'une des revendications 1 et 2, caractérisé par le fait qu'un filtre passe-bande (4) dont la fréquence centrale est égale à la fréquence nominale des signaux d'horloge est monté à la sortie du circuit (2) d'aiguillage des signaux d'horloge.

## Claims

1. A switching device for transmitting one (D, H) only of two incoming digital trains (DN, HN ; DS, HS) in response to a switching demand signal (DCOM), the digital trains (DN, HN ; DS, HS) containing identical data signals (DN, DS) and clock signals at the same frequency (HN, HS), the device comprising a switching circuit (1 ; 10, 11) for the data signals and a switching circuit (2 ; 20,

21) for the clock signals, characterised in that it comprises a circuit (3 ; 30, 31) for controlling the switching circuits (1, 2) which delivers a signal (S) whose changes of state occur, after a change of state of the switching demand signal (DCOM), only from the moment when the two clock signals (HN, HS) are in the same logic state.

2. The device of claim 1, characterised in that the control circuit (3) comprises a NOR gate (31) receiving the two clock signals (HN, HS) and of which the output is connected to the clock input of a flip flop (30) whose input (D) receives the switching demand signal (DCOM), the control signal being available at the output of the flip flop (30).

3. The device of one of claims 1 and 2, characterized in that a band pass filter (4) whose central frequency is equal to the nominal frequency of the clock signals is connected to the output of the switching circuit (2) of the clock signals.

**Ansprüche**

1. Schaltvorrichtung zum Übertragen einer einzigen (D, H) von zwei empfangenen numerischen Folgen (DN, HN ; DS, HS), in Abhängigkeit von einem Schalt-Abfragesignal (DCOM), wobei die numerischen Folgen (DN, HN ; DS, HS) identische Datensignale (DN, DS) und Taktsignale (HN, HS) gleicher Frequenz enthalten, mit einer Verzweigungsschaltung (1 ; 10, 11) für die Datensignale und einer Verzweigungsschaltung (2 ; 20, 21) für die Taktsignale, dadurch gekennzeichnet, daß sie eine Steuerschaltung (3 ; 30, 31) für die Verzweigungsschaltungen (1, 2) aufweist, die ein Signal (S) abgibt, dessen Zustandsänderungen nach einer Zustandsänderung des Schalt-Abfragesignales (DCOM) nur von dem Moment an stattfinden, von dem an die beiden Taktsignale (HN, HS) in dem gleichen logischen Zustand sind.

2. Schaltvorrichtung nach Anspruch 1, dadurch gekennzeichnet, daß die Steuerschaltung (3) ein ODER-NEIN Gatter (31) enthält, das die beiden Taktsignale (HN, HS) empfängt und dessen Ausgang an den Takteingang einer Kipp-Schaltung (30) angeschlossen ist, deren Eingang D das Schalt-Abfragesignal (DCOM) empfängt, wobei das Steuersignal am Ausgang der kipp-Schaltung (30) verfügbar ist.

3. Schaltvorrichtung nach einem der Ansprüche 1 und 2, dadurch gekennzeichnet, daß ein Bandpaßfilter (4), dessen Mittenfrequenz gleich der Nennfrequenz der Taksignale ist, an den Ausgang der Verzweigungsschaltung (2) für die Taktsignale angeschlossen ist.

FIG.1

0 022 718

# FIG.2

0 022 718

FIG.3